(19) Europäisches Patentamt
European Patent Office
Office européen des brevets

(11) **EP 2 669 783 A1**

(12) **EUROPEAN PATENT APPLICATION**

(43) Date of publication:
**04.12.2013 Bulletin 2013/49**

(51) Int Cl.:
**G06F 3/048** (2013.01)   **G06F 3/033** (2013.01)

(21) Application number: **12170338.3**

(22) Date of filing: **31.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BlackBerry Limited**
**Waterloo, ON N2K 0A7 (CA)**

(72) Inventors:
• **Mesaros, Mark David**
 **Waterloo, Ontario N2L 3W8 (CA)**

• **Mulaosmanovic, Jasmin**
 **Waterloo, Ontario N2L 3W8 (CA)**

(74) Representative: **Bryn-Jacobsen, Caelia et al**
 **Kilburn & Strode LLP**
 **20 Red Lion Street**
 **London WC1R 4PJ (GB)**

Remarks:
Amended claims in accordance with Rule 137(2) EPC.

(54) **Virtual ruler for stylus input**

(57) The present disclosure provides for electronic drawing using a virtual ruler 110. An image 302, 502, 704 rendered on a display 106 of an electronic device 108 executing a drawing application in response to stylus input is bounded by an edge 402 of a virtual ruler 110. The virtual ruler 110 is rendered in a region of the display 106 in response to user input, the region being bounded by an edge 402 of the virtual ruler 110. In response to a received stylus gesture, a line 302, 502,704 is rendered on the display 106 outside of the region bounded by the edge 402 of the virtual ruler 110. Stylus input inside the region may be ignored or auto-corrected to the edge 402 of the ruler 110. Stylus input outside of the region may be auto-corrected to the edge 402 of the virtual ruler or used without correction.

FIG. 9

**Description**

BACKGROUND

Graphical input to a computer or other electronic device executing a drawing application may be provided by a variety of peripheral devices including a touch sensitive screen that responds to touch from a user's finger and/or a stylus, a computer mouse, a stylus, a touch pad and other pointing device.

One common use of a physical ruler is to draw a straight line on a sheet of paper using a pen or pencil. In contrast, in a drawing application, a straight line is usually drawn by selecting a line tool from a menu and then selecting the start and end points of the line by 'clicking' or touching the points on the touch screen.

More recently, a virtual ruler has been introduced that provides a screen template for drawing a straight line in a drawing application. In this approach, a virtual ruler is displayed on a screen. Touch within the virtual ruler is interpreted as an instruction to move the ruler, while a finger swiping motion outside of the ruler is interpreted as an instruction to draw a straight line. This approach, while closer to the traditional pen, ruler and paper approach, does not provide all of the features available with real pen, ruler and paper. It would be useful to provide an improved virtual ruler that more closely matches all the uses afforded by a physical ruler, pen, and paper.

BRIEF DESCRIPTION OF THE DRAWINGS

Exemplary embodiments of the present disclosure will be described below with reference to the included drawings such that like reference numerals refer to like elements and in which:

**FIG. 1, FIG.2** and **FIG. 3** are diagrammatic representations of a computer drawing system, in accordance with exemplary embodiments of the present disclosure;

**FIG. 4** and **FIG. 5** are diagrammatic representations of virtual rulers, in accordance with exemplary embodiments of the present disclosure;

**FIG. 6** is diagram illustrating point relocation, in accordance with exemplary embodiments of the present disclosure;

**FIG. 7** is a diagrammatic representation of virtual ruler, in accordance with exemplary embodiments of the present disclosure;

**FIG. 8** is block diagram of a electronic device for electronic drawing using a virtual ruler in accordance with exemplary embodiments of the present disclosure;

**FIG. 9** is a flow chart of a method electronic drawing using a virtual ruler, in accordance with exemplary embodiments of the present disclosure.

**FIG. 10** and **FIG. 11** are diagrammatic representations of a virtual ruler illustrative of ruler configuration, in accordance with exemplary embodiments of the present disclosure.

DETAILED DESCRIPTION

For simplicity and clarity of illustration, reference numerals may be repeated among the figures to indicate corresponding or analogous elements. Numerous details are set forth to provide an understanding of the illustrative embodiments described herein. The embodiments may be practiced without these details. In other instances, well-known methods, procedures, and components have not been described in detail to avoid obscuring the disclosed embodiments. The description is not to be considered as limited to the scope of the embodiments shown and described herein.

The present disclosure relates to a method and apparatus for stylus input to a host electronic device using a virtual ruler. The virtual ruler comprises a rendering of a ruler on the display of the host electronic device. Host software, executed on the electronic device or a networked processor, interprets stylus input dependent upon the position of the stylus relative to the virtual ruler.

In one embodiment, a user can manipulate and move the ruler around the screen using single and multi-touch gestures. In a further embodiment, the user can manipulate the ruler using the stylus.

Once the ruler is aligned, the stylus may be used for drawing. In one embodiment, the user moves the stylus along, or close to, the ruler's edge as would be done on paper. The host software autocorrects the resulting "ripple" line and creates a straight line along the ruler's edge, as intended by the user. This is done by identifying a position at the edge of the ruler that is closest, in some sense, to the stylus position and then drawing a line to that position, so that the stylus position is relocated to the edge of the ruler.

One aspect of a physical ruler is that a user is prevented from drawing on a sheet of paper in the region covered by the ruler. In particular, an edge of the ruler provides a boundary to the drawing area. This aspect of a ruler may be used for purposes other than drawing straight lines. In some embodiments of the disclosure, this feature is implemented using a virtual ruler. In one embodiment, stylus positions within the region of the screen where the virtual ruler is rendered are relocated to the edge of the ruler. In a further embodiment, stylus positions within the region of the screen where the virtual ruler is rendered are ignored. In both case, the virtual ruler provides a boundary.

Therefore in accordance with some aspects of the present disclosure, there is provide a method in which an image rendered on a display of an electronic device executing a drawing application is bounded by an edge of virtual ruler. In response to user input, a virtual ruler is rendered in a region of the display, the region being bounded by an edge of the virtual ruler. Responsive to a received stylus gesture, a line is rendered on the display outside of the region bounded by the edge of the virtual ruler.

In a first exemplary mode of operation of the drawing application, a pixel of the rendered line corresponds to a received stylus gesture position auto-corrected to the edge of the virtual.

In a second exemplary mode of operation of the drawing application, a pixel on the rendered line corresponds to a received stylus gesture position auto-corrected to the edge of the virtual ruler if the received stylus gesture position is inside the region bounded by the edge of the virtual ruler and  to the received stylus gesture position if the received stylus gesture position is outside the region bounded by the edge of the virtual ruler.

In a third exemplary mode of operation of the drawing application, a pixel on the rendered line corresponds to no position if a received stylus gesture position is inside the region bounded by the edge of the virtual ruler and to the received stylus gesture position if the received stylus gesture position is outside of the region bounded by the edge of the virtual ruler.

The line is rendered outside of the first region if the received stylus gesture position is outside of the region bounded by the edge of the virtual ruler, and no line is rendered in the region bounded by the edge of the virtual ruler if the received stylus gesture position is inside of the region bounded by the edge of the virtual ruler.

In one exemplary embodiment, the length and orientation of the virtual ruler are adjusted in response to stylus input in a first control region of the virtual ruler, and the position of the virtual ruler is adjusted in response to stylus input in a second control region of the virtual ruler.

In a further illustrative embodiment, the length and orientation of the virtual ruler are adjusted in response to a multi-touch input in the first region of the virtual ruler, and the position of the virtual ruler is adjusted in response to a single touch input in the first region of the virtual ruler.

One or more additional virtual rulers may be rendered on the display, in which case the rendered line is further bounded by one or more edges of the additional virtual rulers.

In accordance with another aspect of the present disclosure, there is provided an electronic device having a display and a processor. The processor may be operated to render a virtual ruler in a region of the display, the region being bounded by an edge of the virtual ruler. In response to a received stylus gesture, a line is rendered on the display outside of the region bounded by the edge of the virtual ruler. The line may be curved or straight.

In accordance with certain aspects of the present disclosure, there is provided a non-transitory computer-readable medium having computer-executable instructions that, when executed by a processor, cause the processor to render a virtual ruler in a region of a display in response to user input to a touch screen. The region is bounded by an edge of the virtual ruler. The instruction also cause the processor to render a line on the display outside of the region bounded by the edge of the virtual ruler in response to a received stylus gesture.

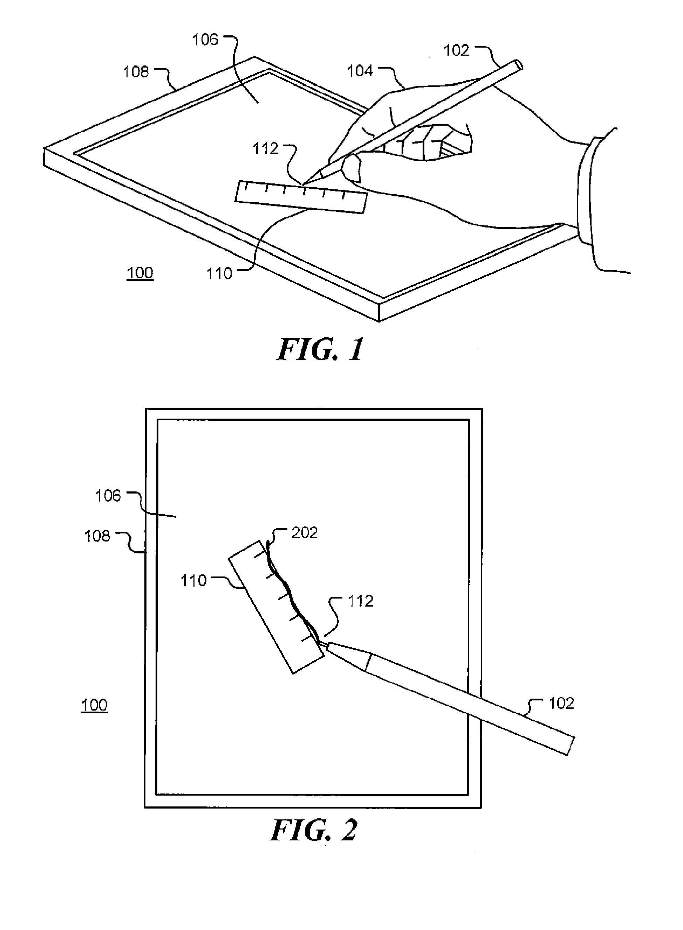

**FIG. 1** is a diagrammatic representation of a computer drawing 100 system, in accordance with exemplary embodiments of the present disclosure. The computer drawing system 100 includes a stylus 102 that is moved by a user 104 across a screen 106 of a host electronic device 108. The position of the stylus 102 on the screen 106 provides input to host software executed on the host electronic devices 108 and/or a processor connected to the host electronic device via a network. The host software controls a rendering of a virtual ruler 110 on the display 106. The position, size and orientation of the virtual ruler 110 are controlled by user interaction with the display 106, either using single or multi-touch finger inputs or using the stylus 102. Lines are displayed on the screen 106 dependent upon the position of the tip 112 of the stylus 102 relative to the virtual ruler 110.

**FIG. 2** is a further diagrammatic representation of a computer drawing system 100, in accordance with exemplary embodiments of the present disclosure. In this example, the tip 112 of the stylus 102 has been moved in a trajectory 202 in proximity to the edge of the virtual ruler 110 rendered on the screen 106 of the host electronic device 108.

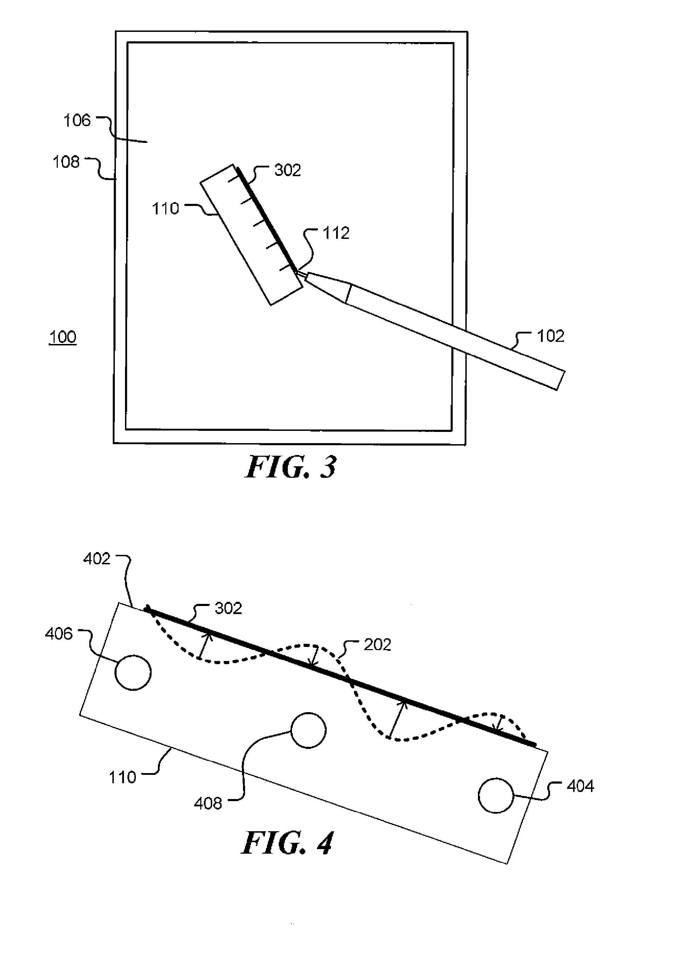

**FIG. 3** is a diagrammatic representation of the computer drawing system 100, in accordance with an exemplary embodiment of the present disclosure. **FIG. 3** shows an exemplary line 302 rendered on the screen 106 in response to stylus trajectory 202 shown in **FIG. 2.** In this embodiment, a straight line 302 is rendered, aligned with the edge of the virtual ruler 110.

The virtual ruler 110 may be rendered as an opaque object, or with various degrees of transparency. A ruler that is at least partially transparent  allows the user to view lines or other objects beneath the ruler. This facilitates alignment of the ruler with previously drawn lines or objects.

**FIG. 4** is a diagrammatic representation of a virtual ruler 110, in accordance with exemplary embodiments of the present disclosure, that illustrates how the straight line 302 may relate to the trajectory 202, shown as the broken line in the drawing. Each point or pixel of the trajectory is moved to a position at the edge 402 of the virtual ruler 110. In one embodiment, an edge position is selected as the position on the edge 402 closest, in some sense, to a corresponding point on the trajectory 302. Thus, trajectory points are relocated to edge points, as indicated by the arrows in the figure.

The position and orientation of the virtual ruler 110 may be adjusted by user interaction with ruler control regions 404, 406 and 408 of the ruler. For example, a user may drag ruler control region 404 to a new location, using a stylus or a finger while the ruler pivots about ruler control region 406. This enables a user to alter the orientation or length of the ruler. Similarly, a user can alter the orientation or length of the ruler by dragging ruler control region 406 to a new location. Dragging ruler control region 408 moves the location of the ruler, but does not change its length. Together, these operations enable positioning of the ruler using the stylus, which is useful for single-handed operation.

In a further illustrative embodiment, position, orientation and length may be altered together by moving regions 404 and 406 at the same time using multi-touch, thereby allowing the ruler to be moved with one hand while the other hand holds the stylus.

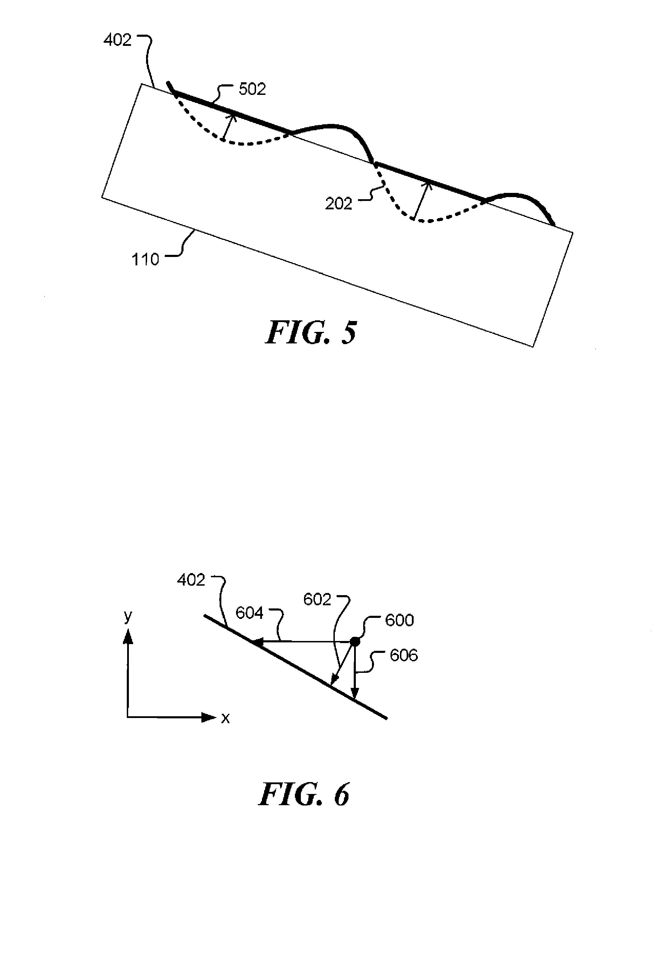

In the mode of operation illustrated in **FIG. 4,** all points of the stylus trajectory are auto-corrected by 'snapping' them to the edge of the ruler. In the mode of operation shown in **FIG. 5,** the stylus trajectory within region of the screen where the virtual ruler is rendered is auto-corrected by 'snapping' it to the edge of the ruler, as indicated by the arrows in the drawing, but the line 502 follows the actual trajectory of the trajectory is outside of the virtual ruler. This exemplary mode of operation more closely matches that of a physical ruler.

**FIG. 6** is a diagram illustrating point relocation, in accordance with exemplary embodiments of the present disclosure. The modes of operation described above with reference to **FIG. 4** and **FIG. 5** call for auto-correction of at least some portions of the stylus trajectory. **FIG. 6** illustrates some examples of how this may be achieved. In the example shown, a stylus is located at the position 600 on the screen. The position 600 is denoted by Cartesian coordinates ($x_0$, $y_0$). The edge of the ruler is denoted by the line 402. In one embodiment, the position 600 is relocated or auto-corrected in the direction, indicated by arrow 602, to the point on the line 402 that is closest to the point 600. In a further illustrative embodiment, the position 600 is relocated or auto-corrected in the x-direction 604 or the y-direction 606, depending on which correction is the smaller. This approach generally requires less computation than determining the direction 602. Other auto-correction techniques may be used without departing from the present disclosure. The auto correction may be performed as the stylus is moved to provide visual feedback to the user.

As an example, when points (x,y) on the edge satisfy the equation $y = mx + c$, the point on the edge, indicated by the arrow 602, that is closest to the stylus position ($x_0, y_0$) has coordinates:

$$x_3 = \frac{x_0 + m\left(y_0 - c\right)}{m^2 - 1}, \quad y_3 = mx_3 + c \quad , \qquad (1)$$

the closest point having the same y coordinate, indicated by the arrow 604, has coordinates:

$$x_2 = \left(y_o - c\right)/m, \quad y_2 = y_0 \quad , \qquad (2)$$

and the closest point having the same x coordinate, indicated by the arrow 606, has coordinates:

$$x_1 = x_0, \quad y_1 = mx_0 + c \qquad (3)$$

Other auto-correction approaches may be used.

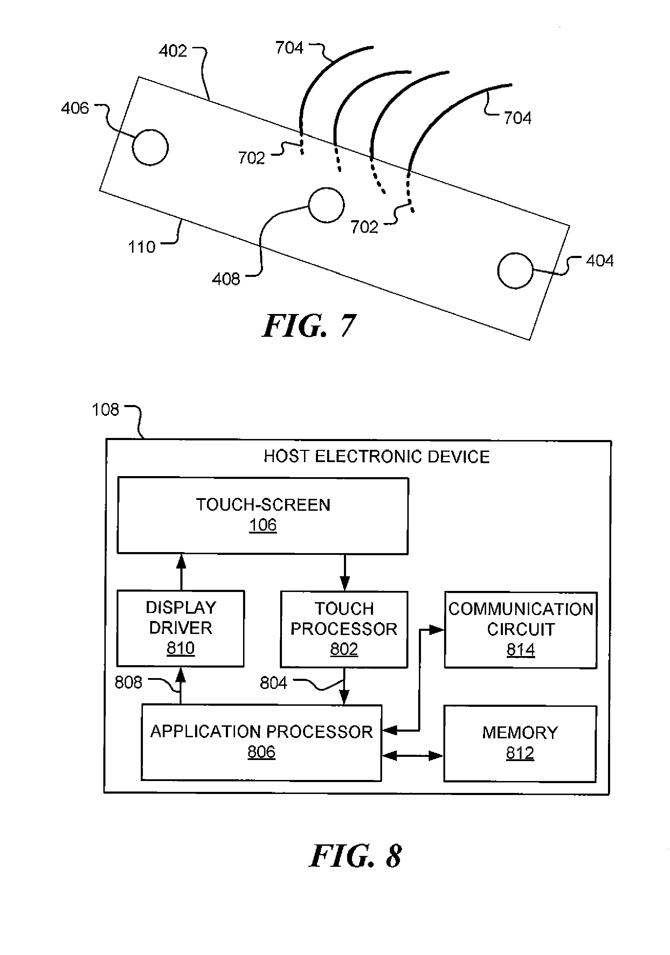

**FIG. 7** is a diagrammatic representation of a virtual ruler, in accordance with exemplary embodiments of the present disclosure. **FIG. 7** illustrates a third mode of operation of a drawing application, In this mode of operation, motion of the stylus within the virtual ruler 110, as depicted by the broken lines 702 in the drawing, is ignored and produces no corresponding line. Motion of the stylus outside of the virtual ruler 110 results in lines 704. It is noted that the lines drawn on the screen may have any format selected by the user and are not constrained to be solid. In this example, the virtual ruler enables a user to draw a series of curved lines 704, the ends of which are aligned along the edge 402 of the ruler 110. This is useful, for example, for shading or cross-hatching a region of the drawings. Again, this behaviour matches that of a physical ruler, It is noted that multiple rulers may be used at the same time, for example, to define a region to be shaded.

In an illustrative embodiment, when a stylus trajectory begins outside the ruler and then enters the region of the ruler, the trajectory may be ignored even if it enters a ruler control region 404, 406 or 408.

The exemplary embodiments discussed above show how the behaviour of the virtual ruler is not limited to the drawing of straight lines.

Three exemplary modes of operation have been described above. An embodiment may use one or more of the modes. When more than one mode is used, the mode may be selected by the user. The modes of operation are summarized in the table below:

**TABLE 1.**

| Stylus Position | MODE | | |
|---|---|---|---|
| | 1 | 2 | 3 |
| Inside ruler region | autocorrect | autocorrect | ignore |
| Outside ruler region | autocorrect | use unchanged | use unchanged |

**FIG. 8** is a block diagram of an electronic device 108, in accordance with exemplary embodiments of the present disclosure. The electronic device 108 comprises a touch screen 106 that is configured to receive stylus input and/or other touch input. The touch screen 106 is coupled to a touch processor 802 that determines stylus or other touch positions 804 in response to touch screen signals. The touch positions are passed to application processor 806. In operation, a drawing application executing on the processor 806 generates image data 808 that is passed to a display driver 810. The display driver causes the image data 808 to be rendered on the touch screen 106. The image data, or data relating to the image data, may be stored in a memory 812. The electronic device may also include a communication circuit 814 for communication with other electronic devices. The image data, the touch positions, or data relating them may be communicated to a remote processor. In one embodiment, the drawing application is executed on a remote processor and the host electronic receives processed touch positions, such as image data, from the remote processor.

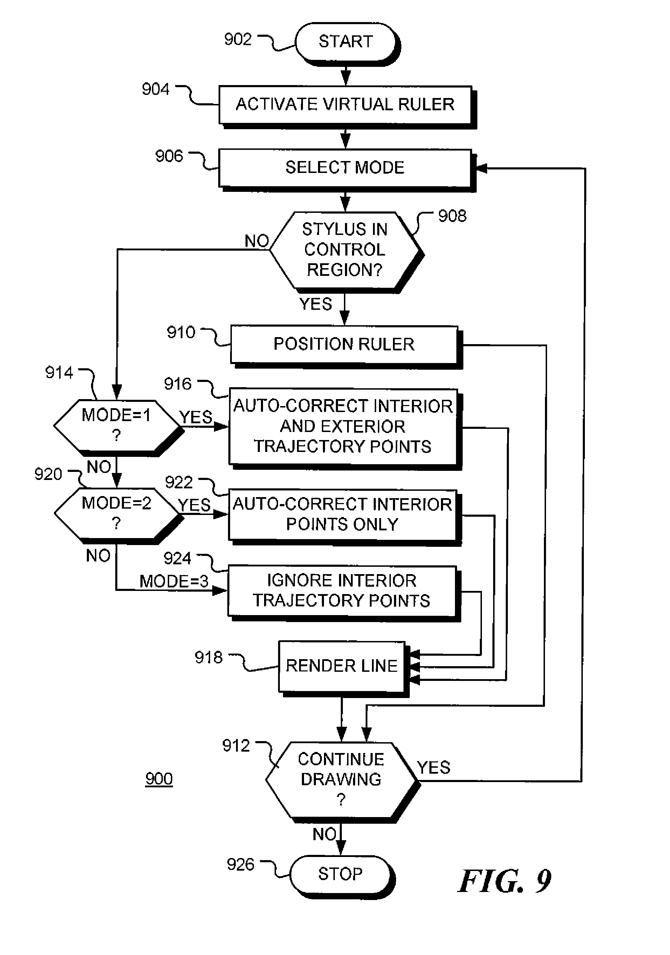

**FIG. 9** is a flow chart 900 of a method of electronic drawing using a virtual ruler, in accordance with exemplary embodiments of the present disclosure. Following start block 902, a drawing application is executed and a virtual ruler is rendered in a first region of a screen of the electronic device at block 904. At block 906, the operating mode of the drawing application is selected. No action is needed if the current operating mode is the desired operating mode. At decision block 908, a decision is made as to whether a stylus, or other touch implement, is in a control region of the virtual ruler. If the stylus is in a control region, as depicted by the positive branch from decision block 908, the ruler is repositioned at block 910 by dragging the control position to a new screen location, as described above. Flow then continues to decision block 912. If not, as depicted by the negative branch from decision block 908, flow continues to block 914 and a line is rendered on the screen of the electronic device in response to an input stylus position. The position of the line is dependent upon which operating mode is selected. If a first mode is selected, as depicted by the positive branch from decision block 914, the line position is produced by auto-correcting the stylus position to an edge of the virtual ruler at block 916. The stylus position is auto-corrected whether it is inside the first region (occupied by the virtual ruler) or outside of the first region. The line is rendered at block 918. If a second mode is selected, as depicted by the positive branch from decision block 920 the line position is produced by auto-correcting the stylus position to an edge of the virtual ruler, provided it is located within the first region, at block 922. The line is rendered at block 918. Stylus positions outside of the first region are not corrected. If neither the first nor second mode is selected, as depicted by the negative branch from decision block 920, it is assumed that a third mode is selected. In this mode, the line position is selected, at block 924, as the stylus position if the position is outside of the first  region and stylus input is ignored if the stylus position is inside of the first region. The line is rendered at block 918. If continued drawing is required, as depicted by the positive branch from decision block 912, flow returns to block 906, where the operating mode can be changed, if desired. If continued drawing is not required, as depicted by the negative branch from decision block 912, the method terminates at block 926.

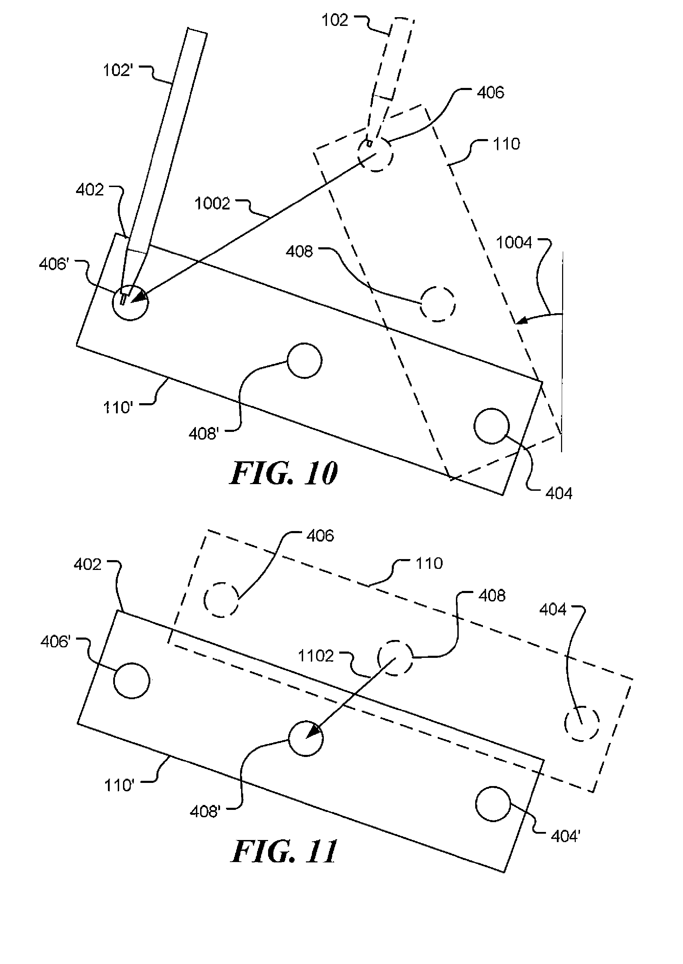

**FIG. 10** is a diagrammatic representation of a virtual ruler. An initial ruler 110 has control regions 404, 406 and 408, as described above. In this example, the tip of stylus 102 is touched into the control region 406 and then dragged to a new position as denoted by stylus 102'. The rendering of the virtual ruler follows the trajectory of the stylus tip, so the region 406 is moved in the direction indicated by arrow 1002 to a new position 406'. Virtual ruler 110 is redrawn as virtual ruler 110'. Control regions 404, 406 and 408 are redrawn as control regions control regions 404', 406' and 408', respectively. The virtual ruler 110' is lengthened and rotated relative to ruler 110. In this example the ruler is rotated about position 404, but it could rotated abut a different point (such as the center, for example).

The length and/or angle of the ruler may be varied in a substantially continuously manner or by discrete amounts. For example, a user may select that the angle 1004 of the ruler be 'snapped' to the angle closest to a set of specified angles, such as $0°$, $\pm30°$, $\pm45°$, $\pm60°$, $\pm90°$, etc. The angle may be measured from the vertical, the horizontal, or from an angled line specified by the user.

**EP 2 669 783 A1**

**FIG. 11** is a further diagrammatic representation of a virtual ruler. Again, the initial ruler 110 has control regions 404, 406 and 408, as described above. In this example, the tip of stylus is touched into the central control region 408 and then dragged to a new position 408' as indicated by the arrow 1102. The rendering of the virtual ruler follows the trajectory of the stylus tip. Virtual ruler 110 is redrawn as virtual ruler 110'. Control regions 404, 406 and 408 are redrawn as control regions control regions 404', 406' and 408', respectively. In this example, the orientation and length of the virtual ruler 110' are unchanged, but is position is changed relative to ruler 110.

As previously described, the virtual ruler may be adjusted using a stylus or other touch input.

The implementations of the present disclosure described above are intended to be merely exemplary. It will be appreciated by those of skill in the art that alterations, modifications and variations to the illustrative embodiments disclosed herein may be made without departing from the scope of the present disclosure. Moreover, selected features from one or more of the above-described embodiments may be combined to create alternative embodiments not explicitly shown and described herein.

It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

The implementations of the present disclosure described above are intended to be merely exemplary. It will be appreciated by those of skill in the art that alterations, modifications and variations to the illustrative embodiments disclosed herein may be made without departing from the scope of the present disclosure. Moreover, selected features from one or more of the above-described embodiments may be combined to create alternative embodiments not explicitly shown and described herein.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

**Claims**

1.   A method for bounding an image rendered on a display 106 of an electronic device 108 executing a drawing application, comprising:

> responsive to user input, rendering a virtual ruler 110 in a region of the display, the region bounded by an edge 402 of the virtual ruler 110; and
> responsive to a received stylus gesture, rendering a line 302, 502, 704 on the display 106 outside of the region bounded by the edge 402 of the virtual ruler 110.

2.   The method of claim 1, where, in a first mode of operation of the drawing application, a pixel of the rendered line 302 corresponds to a received stylus gesture position 202 auto-corrected to the edge 402 of the virtual ruler 110.

3.   The method of claim 1, where, in a second mode of operation of the drawing application, a pixel on the rendered line 502 corresponds to:

> a received stylus gesture position auto-corrected to the edge 402 of the virtual ruler 110 if the received stylus gesture position is inside the region bounded by the edge 402 of the virtual ruler 110; and
> the received stylus gesture position if the received stylus gesture position is outside the region bounded by the edge 402 of the virtual ruler 110.

4.   The method of claim 1, where, in a third mode of operation of the drawing application, a pixel on the rendered line 704 corresponds to:

no position if a received stylus gesture position is inside the region bounded by the edge 402 of the virtual ruler 110; and

the received stylus gesture position if the received stylus gesture position is outside of the region bounded by the edge 402 of the virtual ruler 110.

5. The method of claim 1, where rendering a line 302, 502, 704 on the display 106 comprises rendering a line outside of the region bounded by an edge 402 of the virtual ruler 110 if the received stylus gesture position 112 is outside of the region bounded by the edge 402 of the virtual ruler 110, the method further comprising:

not rendering a line in the region bounded by an edge 402 of the virtual ruler 110 if the received stylus gesture position 112 is inside of the region bounded by the edge 402 of the virtual ruler 110.

6. The method of claim 1, further comprising:

adjusting the length and orientation of the virtual ruler 110 in response to received stylus input in a first control region 404, 406 of the virtual ruler 110; and

adjusting the position of the virtual ruler 110 in response to received stylus input in a second control region 408 of the virtual ruler 110.

7. The method of claim 6, further comprising:

rendering the virtual ruler 110 at an angle 1004 selected from a discrete set of angles.

8. The method of claim 1, further comprising:

adjusting the length and orientation of the virtual ruler 110 in response to a multi-touch input within the virtual ruler 110; and

adjusting the position of the virtual ruler in response to a single touch input in a second control region 408 of the virtual ruler 110.

9. The method of claim 1, further comprising:

rendering at least one additional virtual ruler 110 on the display 106, where the rendered line is further bounded by an edge 402 of the at least one additional virtual ruler 110.

10. The method of claim 1, where the rendered virtual ruler 110 is at least partially transparent.

11. An electronic device 108 comprising:

a display 106;
a processor 806 operable to:

render a virtual ruler 110 in a region of the display 106, the region bounded by an edge 402 of the virtual ruler 110; and

in response to a received stylus gesture, render a line 302, 502,704 on the display 106 outside of the region bounded by the edge 402 of the virtual ruler 110.

12. The electronic device 106 of claim 11, where a pixel on the rendered line 302, 502 in response to a stylus gesture position 202 within the region bounded by the edge 402 of the virtual ruler 110 is auto-corrected to the edge 402 of the virtual ruler 110.

13. The electronic device 106 of claim 11, where no pixel on the rendered line 704 is generated from a stylus gesture position 702 within the region bounded by the edge 402 of the virtual ruler 110.

14. The electronic device 106 of claim 11, where a pixel on the rendered line 302 in response to a stylus gesture position 202 outside of the region bounded by the edge 402 of the virtual ruler 110 is auto-corrected to the edge 402 of the virtual ruler 110.

**15.** The electronic device 106 of claim 11, where the processor 806 is further operable to configure the virtual ruler 110 in response to touch inputs in one or more control regions 404, 406, 408 of the virtual ruler 110.

**Amended claims in accordance with Rule 137(2) EPC.**

**1.** A method for bounding an image rendered on a display 106 of an electronic device 108 executing a drawing application, comprising:

responsive to user input, rendering a virtual ruler 110 in a region of the display, the region bounded by an edge 402 of the virtual ruler 110;
responsive to a received stylus gesture, rendering a line 302, 502, 704 on the display 106 outside of the region bounded by the edge 402 of the virtual ruler 110;
adjusting the length and orientation of the virtual ruler 110 in response to received stylus input in a first control region 404, 406 of the virtual ruler 110; and
adjusting the position of the virtual ruler 110 in response to received stylus input in a second control region 408 of the virtual ruler 110.

**2.** The method of claim 1, where, in a first mode of operation of the drawing application, a pixel of the rendered line 302 corresponds to a received stylus gesture position 202 auto-corrected to the edge 402 of the virtual ruler 110.

**3.** The method of claim 1, where, in a second mode of operation of the drawing application, a pixel on the rendered line 502 corresponds to:

a received stylus gesture position auto-corrected to the edge 402 of the virtual ruler 110 if the received stylus gesture position is inside the region bounded by the edge 402 of the virtual ruler 110; and
the received stylus gesture position if the received stylus gesture position is outside the region bounded by the edge 402 of the virtual ruler 110.

**4.** The method of claim 1, where, in a third mode of operation of the drawing application, a pixel on the rendered line 704 corresponds to:

no position if a received stylus gesture position is inside the region bounded by the edge 402 of the virtual ruler 110; and
the received stylus gesture position if the received stylus gesture position is outside of the region bounded by the edge 402 of the virtual ruler 110.

**5.** The method of claim 1, where rendering a line 302, 502, 704 on the display 106 comprises rendering a line outside of the region bounded by an edge 402 of the virtual ruler 110 if the received stylus gesture position 112 is outside of the region bounded by the edge 402 of the virtual ruler 110, the method further comprising:

not rendering a line in the region bounded by an edge 402 of the virtual ruler 110 if the received stylus gesture position 112 is inside of the region bounded by the edge 402 of the virtual ruler 110.

**6.** The method of claim 1, further comprising:

rendering the virtual ruler 110 at an angle 1004 selected from a discrete set of angles.

**7.** The method of claim 1, further comprising:

adjusting the length and orientation of the virtual ruler 110 in response to a multi-touch input within the virtual ruler 110; and
adjusting the position of the virtual ruler in response to a single touch input in a second control region 408 of the virtual ruler 110.

**8.** The method of claim 1, further comprising:

rendering at least one additional virtual ruler 110 on the display 106, where the rendered line is further bounded by an edge 402 of the at least one additional virtual ruler 110.

**9.** The method of claim 1, where the rendered virtual ruler 110 is at least partially transparent.

**10.** An electronic device 108 comprising:

a display 106;
a processor 806 operable to:

render a virtual ruler 110 in a region of the display 106, the region bounded by an edge 402 of the virtual ruler 110;
in response to a received stylus gesture, render a line 302, 502,704 on the display 106 outside of the region bounded by the edge 402 of the virtual ruler 110;
adjust the length and orientation of the virtual ruler 110 in response to received stylus input in a first control region 404, 406 of the virtual ruler 110; and
adjust the position of the virtual ruler 110 in response to received stylus input in a second control region 408 of the virtual ruler 110.

**11.** The electronic device 106 of claim 10, where a pixel on the rendered line 302, 502 in response to a stylus gesture position 202 within the region bounded by the edge 402 of the virtual ruler 110 is auto-corrected to the edge 402 of the virtual ruler 110.

**12.** The electronic device 106 of claim 10, where no pixel on the rendered line 704 is generated from a stylus gesture position 702 within the region bounded by the edge 402 of the virtual ruler 110.

**13.** The electronic device 106 of claim 10, where a pixel on the rendered line 302 in response to a stylus gesture position 202 outside of the region bounded by the edge 402 of the virtual ruler 110 is auto-corrected to the edge 402 of the virtual ruler 110.

**14.** The electronic device 106 of claim 10, where the processor 806 is further operable to configure the virtual ruler 110 in response to touch inputs in one or more control regions 404, 406, 408 of the virtual ruler 110.

**FIG. 1**

**FIG. 2**

**FIG. 3**

**FIG. 4**

**FIG. 5**

**FIG. 6**

*FIG. 7*

*FIG. 8*

FIG. 9

900

**FIG. 10**

**FIG. 11**

Europäisches
Patentamt

European
Patent Office

Office européen
des brevets

# EUROPEAN SEARCH REPORT

Application Number

EP 12 17 0338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/023225 A1 (PROMETHEAN LTD [GB]; PEARCE NIGEL [GB]) 3 March 2011 (2011-03-03) * page 40, line 22 - page 43, line 4 * * page 48, line 17 - page 50, line 5 * ----- | 1-15 | INV. G06F3/048 G06F3/033 |

TECHNICAL FIELDS
SEARCHED      (IPC)

G06F

The present search report has been drawn up for all claims

| Place of search | Date of completion of the search | Examiner |
|---|---|---|
| Munich | 8 August 2012 | Wiedmeyer, Vera |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 12 17 0338

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2012

| Patent document cited in search report | Publication date | Patent family member(s) | | Publication date |
|---|---|---|---|---|
| WO 2011023225 A1 | 03-03-2011 | CN | 102576268 A | 11-07-2012 |
| | | EP | 2467771 A1 | 27-06-2012 |
| | | GB | 2486843 A | 27-06-2012 |
| | | WO | 2011023225 A1 | 03-03-2011 |

EPO FORM P0459

For more details about this annex : see Official Journal of the European Patent Office, No. 12/82